# EUROPÄISCHE PATENTANMELDUNG

(11) **EP 1 956 726 A1**
(43) Veröffentlichungstag der Anmeldung: **13.08.2008**
(21) Anmeldenummer: 07002563.0
(22) Anmeldetag: 06.02.2007
(51) Int. Cl.: H04B 3/54

(54) **Datenübertragungseinrichtung für ein Luftfahrzeug**

(71) Anmelder: Lufthansa Technik AG, 22335 Hamburg (DE)
(72) Erfinder: Niss, Frank, 22453 Hamburg (DE)
(74) Vertreter: Glawe, Delfs, Moll

(57) **Zusammenfassung**

Die Erfindung betrifft ein Luftfahrzeug mit einem bordseitigen Datennetzwerk (6) und einem bordseitigen Stromnetz (4), das eine Einrichtung (7) zur Verbindung mit einem stationären Stromnetz aufweist. Erfindungsgemäß ist vorgesehen, dass eine Adaptereinrichtung (5) vorgesehen ist, die eine Datenübertragung von dem/an das bordseitige Datennetzwerk (6) über das bordseitige Stromnetz (4), die Einrichtung (7) zur Verbindung mit einem stationären Stromnetz (2), und ein stationäres Stromnetz (2) an ein/von einem stationären Datennetzwerk (1) ermöglicht. Gegenstand der Erfindung ist gleichfalls eine entsprechend zur Datenübertragung ausgerüstete bodenseitige Einrichtung zum Versorgen eines Luftfahrzeugs mit Strom sowie eine Anordnung aus dem Luftfahrzeug und der bodenseitigen Einrichtung.

## Beschreibung

Die Erfindung betrifft ein Luftfahrzeug gemäß dem Oberbegriff des Anspruchs 1. Der Datenbestand an Bord von Flugzeugen muss regelmäßig Updates erfahren. Dies betrifft sowohl die Betriebssysteme des Flugzeugs, aber auch das Unterhaltungsprogramm an Bord von Langstreckenflugzeugen. Insbesondere beim Übertragen von Videodateien fallen verhältnismäßig große Datenmengen an.

Aus offenkundiger Vorbenutzung ist es bekannt, eine Datenübertragung mit dem sogenannten Gate-Link (einem drahtlosen W-Lan System) vorzunehmen, wenn das Flugzeug am Gate parkt. Für vertrauliche Systemdaten wird dieser drahtlose Übertragungsweg aufgrund von Sicherheitsbedenken jedoch nicht oder nur ungern verwendet. Die gleichen Bedenken gibt es bei der Übertragung von urheberrechtlich geschützten Unterhaltungsdateien wie Filmen.

Der Erfindung liegt die Aufgabe zugrunde, eine Möglichkeit zur Datenübertragung auf ein Netzwerk eines Luftfahrzeuges zu schaffen, das den Sicherheitsbedenken Rechnung trägt und problemlos in der praktischen Anwendung ist.

Die Erfindung löst diese Aufgabe durch die Merkmale der unabhängigen Patentansprüche 1, 4 und 7.

Zunächst seien einige im Rahmen der Erfindung verwendete Begriffe erläutert. Ein Luftfahrzeug weist ein bordseitiges Stromnetz auf. Üblicherweise handelt es sich dabei um ein Drehstromnetz (3×115V/400Hz). Die Stromeinspeisung in dieses bordseitige Stromnetz erfolgt im Flugbetrieb über an einer oder mehreren Turbinen angeordneten Generatoren. Bei Stillstand der Triebwerke kann die Stromversorgung über eine bordseitig installierte, separate APU (Auxiliary Power Unit) zu erfolgen.

Aus Umwelt und Lärmschutzgründen ist der Betrieb der APUs an vielen kommerziellen Flughäfen nicht gestattet, während das Flugzeug am Gate parkt. Stattdessen ist an der Außenseite des Flugzeugs eine Kupplung vorgesehen, mittels der das Stromnetz mit einem stationären Stromnetz verbunden und von diesem stationären Stromnetz gespeist werden kann.

Der Begriff bordseitiges Datennetzwerk umfasst jegliche Einrichtung, über die eine Datenkommunikation von/an bordseitige Einrichtungen wie beispielsweise Rechner zur Steuerung/Überwachung von Betriebseinrichtungen des Luftfahrzeugs, Rechner bzw. Server für Cabin Entertainment Zwecke und dergleichen erfolgen kann. Bei einem solchen Datennetzwerk kann es sich beispielsweise um ein Ethernet oder um ein anders drahtgebundenes oder auch drahtloses Netzwerk handeln.

Der Begriff stationäres Stromnetz bezeichnet ein bodenseitiges Stromnetz insbesondere am Flughafen, an dass das bordseitige Stromnetz angeschlossen werden kann. Der Begriff stationäres Datennetzwerk umfasst jegliche Einrichtungen, die eine Verbindung mit stationären Rechnern oder Datenspeichereinrichtungen ermöglichen. Vorzugsweise handelt es sich bei den bordseitigen bzw. stationären Datennetzwerken um Netzwerke nach üblichen Standards, die das Verbinden mehrfacher Rechner oder sonstiger Datenspeicherungs-, Verarbeitungs- oder Ausgabeeinrichtungen miteinander ermöglichen. Im Rahmen der Erfindung kann es sich bei den Datennetzwerken jedoch auch um einfache Datenleitungen handeln, die die Adaptereinrichtung mit einem Rechner oder einer sonstigen Datenspeicherungs-, Verarbeitungs- oder Ausgabeeinrichtung verbinden.

Bei der Adaptereinrichtung handelt es sich um eine Umsetzereinrichtung, die einen Datenstrom aus dem Netzwerk in eine Form bringt, die sich über die Leitungen des bordseitigen bzw. stationären Stromnetzes übertragen lassen.

Die Erfindung ermöglicht eine sichere und problemlose Datenübertragung von einem/an ein am Gate parkenden Flugzeug. Durch das sowieso vorgesehene Anschließen der Bodenstromversorgung an das bordseitige Stromnetz wird gleichzeitig die Datenverbindung hergestellt und so das Netzwerk des Flugzeugs mit dem Netzwerk des Flughafens verbunden. Die Geschwindigkeit der Datenübertragung über die verbundenen Stromnetze kann der eines typischen Ethernets entsprechen und beispielsweise 10MBit/s oder 100MBit/s betragen. Sie wird in der Regel nicht ausreichen, um während der typischen Parkdauer eines Langstreckenflugzeugs am Gate (1 h) einen vollständigen oder mehrere Spielfilme als Videodateien zu übertragen. Dies ist in der Praxis kein gravierender Nachteil, da die Filme den Luftfahrtgesellschaften in der Regel etwa einen Monat vor ihrer Premiere an Bord zur Verfügung stehen und somit sukzessive während mehrerer Bodenaufenthalte auf den Bordrechner des Flugzeugs aufgespielt werden können.

Die Datenübertragung über das Stromnetz erfolgt vorzugsweise per Hochfrequenzsignalübertragung, wobei die Hochfrequenz auf die Netzfrequenz (bei Flugzeugstromnetzen typischerweise 400Hz) aufmoduliert wird. Ein bevorzugtes Frequenzband für die aufmodulierte Datenübertragung liegt zwischen 4 und 30MHz. Die Datenübertragung über das Stromnetz kann nach einem Standard ausgewählt aus der Gruppe aus HomePlug 1.0, HomePlug AV (HomePlug Audio/Video, ein Standard zu Übertragung hoher Datenraten) und Digital Home Standards (ein von der Universal Powerline Association entwickelter Standard) erfolgen.

Gegenstand der Erfindung ist somit einerseits ein Luftfahrzeug, dass erfindungsgemäß zur Datenübertragung über das Stromnetz und in Bodenstromanschluss ausgerüstet ist, andererseits eine bodenseitige Einrichtung, bei der ein stationäres Netzwerk erfindungsgemäß ausgerüstet ist zur Datenübertragung an ein Flugzeug über den Bordstromanschluss. Gegenstand der Erfindung ist ferner eine Anordnung aus einem erfindungsgemäßen Luftfahrzeug und der bodenseitigen Einrichtung am Flughafen sowie die Verwendung einer solchen Anordnung zum Übertragung von Daten, insbesondere Betriebsdaten des Flugzeugs oder Einrichtungen davon sowie Video- und/oder Audiodaten von einer bzw. an eine bordseitige Speichereinrichtung.

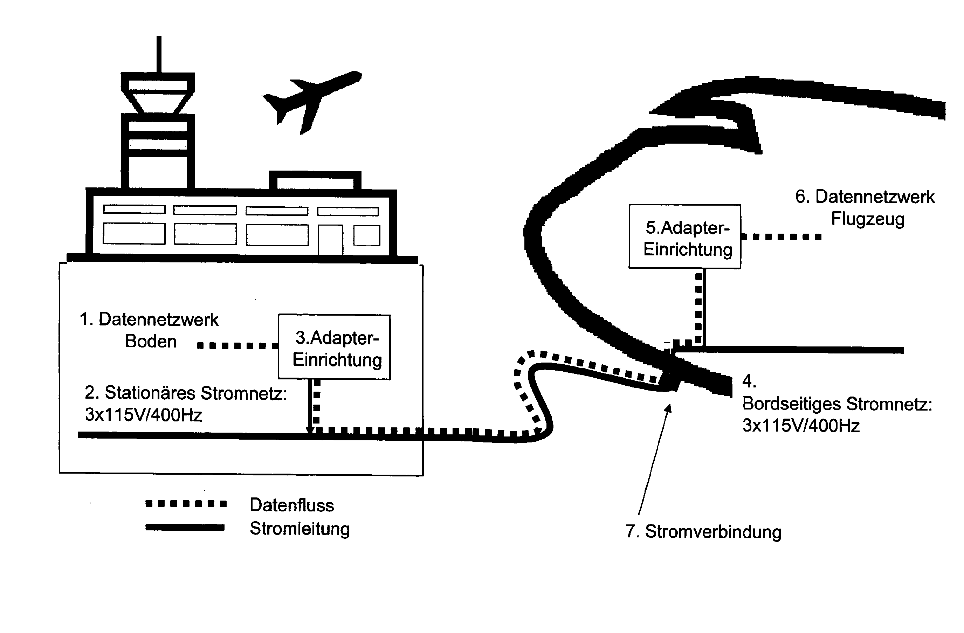

Ein Ausführungsbeispiel der Erfindung wird im Folgenden anhand der Zeichnung erläutert. In einem Flughafengebäude ist ein Datennetzwerk 1 vorhanden, das mit verschiedenen nicht dargestellten Datenverarbeitungseinrichtungen verbunden ist. Ferner besitzt der Flughafen ein bei 2 dargestelltes stationäres Stromnetz, das zur Versorgung am Gate parkender Flugzeuge mit Bodenstrom vorgesehen ist. Es handelt sich um ein Drehstromnetz (3x115V/400Hz). Eine Adaptereinheit 3 moduliert/demoduliert Daten aus dem bodenseitigen Datennetzwerk 1 auf die Leitung des stationären Stromnetzes 2.

Das Flugzeug besitzt ein bordseitiges Datennetzwerk 6, das ebenfalls mit verschiedenen bordseitigen Datenverarbeitungseinrichtungen, u. a. einem Audio/Videoserver verbunden ist. Ferner ist ein bordseitiges Stromnetz 4 vorhanden. Eine Adaptereinheit 5 dient hier ebenfalls dem Aufmodulieren/Demodulieren von Daten auf das bzw. von dem bordseitigen Stromnetz 4.

Sobald das Flugzeug am Gate parkt, werden das stationäre Stromnetz 2 und das Bordstromnetz 4 über einen bei 7 angedeuteten Landstromanschluss des Flugzeugs miteinander verbunden. Die Stromversorgung des Flugzeugs erfolgt jetzt aus dem stationären Stromnetz 2, eine eigene Stromerzeugung an Bord des Flugzeuges ist nicht erforderlich.

Über diese Verbindung der beiden Stromnetze 2, 4 kann jetzt ein Datenaustausch zwischen dem stationären, bodenseitigen Datennetzwerk 1 und dem bordseitigen Datennetzwerk 6 stattfinden. Die beiden Adaptereinheiten 3,5 modulieren/demodulieren hierzu die Daten auf die bzw. von den Verbindungskabeln der Stromnetze. Es ist somit eine sichere und schnelle Datenübertragung an das bzw. von dem Flugzeug möglich, ohne dass hierzu separate Datenverbindungskabel angeschlossen werden müssen.

## Patentansprüche

1. Luftfahrzeug, mit einem bordseitigem Datennetzwerk (6) und einem bordseitigen Stromnetz (4), das eine Einrichtung (7) zur Verbindung mit einem stationären Stromnetz aufweist, **dadurch gekennzeichnet, dass** eine Adaptereinrichtung (5) vorgesehen ist, die eine Datenübertragung von dem/an das bordseitige Datennetzwerk (6) über das bordseitige Stromnetz (4), die Einrichtung (7) zur Verbindung mit einem stationären Stromnetz (2), und ein stationäres Stromnetz (2) an ein/von einem stationären Datennetzwerk (1) ermöglicht.

2. Luftfahrzeug nach Anspruch 1, **dadurch gekennzeichnet, dass** die Datenübertragung über das Stromnetz aufmoduliert mit einer Frequenz zwischen 4 und 30 MHz erfolgt.

3. Luftfahrzeug nach Anspruch 1 oder 2, **dadurch gekennzeichnet, dass** die Datenübertragung über das Stromnetz nach einem Standard ausgewählt aus der Gruppe aus HomePlug 1.0, HomePlug AV, und Digital Home Standards erfolgt.

4. Einrichtung zum Versorgen eines Luftfahrzeugs mit Strom aus einem stationären Stromnetz (2), das eine Einrichtung (7) zur Verbindung mit einem bordseitigen Stromnetz (4) des Luftfahrzeugs aufweist **dadurch gekennzeichnet, dass** zusätzlich eine Adaptereinrichtung (3) vorgesehen ist, die eine Datenübertragung von einem/an ein bordseitiges Datennetzwerk (6) über das stationäre Stromnetz (2), eine Einrichtung (7) zur Verbindung mit einem bordseitigen Stromnetz (4), und einem bordseitigen Stromnetz (4) an ein/von einem bordseitigen Datennetzwerk (6) ermöglicht.

5. Einrichtung nach Anspruch 4, **dadurch gekennzeichnet, dass** die Datenübertragung über das Stromnetz aufmoduliert mit einer Frequenz zwischen 4.und 30 MHz erfolgt.

6. Einrichtung nach Anspruch 4 oder 5, **dadurch gekennzeichnet, dass** die Datenübertragung über das Stromnetz nach einem Standard ausgewählt aus der Gruppe aus HomePlug 1.0, HomePlug AV, und Digital Home Standards erfolgt.

7. Anordnung aus einem Luftfahrzeug nach einem der Ansprüche 1 bis 3 und einer Einrichtung nach einem der Ansprüche 4 bis 6.

8. Anordnung nach Anspruch 7, **dadurch gekennzeichnet, dass** das bordseitige Stromnetz mit dem stationären Stromnetz verbunden ist.

9. Verwendung einer Anordnung nach Anspruch 8 zum Übertragen von Daten auf eine bordseitige Speichereinrichtung.

10. Verwendung einer Anordnung nach Anspruch 9, **dadurch gekennzeichnet, dass** die Daten Betriebsdaten des Flugzeugs und/oder Video- und/oder Audiodaten sind.
